# EUROPÄISCHE PATENTSCHRIFT

(11) **EP 3 147 574 B1**
(45) Veröffentlichungstag und Bekanntmachung des Hinweises auf die Patenterteilung: **20.06.2018**
(21) Anmeldenummer: 16189738.4
(22) Anmeldetag: 20.09.2016
(51) Int. Cl.: F24D 3/10, F16K 11/22, F24D 17/00, F24D 19/10, F16K 31/00, F24D 19/00

(54) **ABSPERRVENTIL FÜR EIN HEIZUNGSSYSTEM UND HEIZUNGSSYSTEM**
LOCKING VALVE FOR A HEATING SYSTEM AND HEATING SYSTEM
VANNE D'ISOLEMENT POUR UN SYSTÈME DE CHAUFFAGE ET SYSTÈME DE CHAUFFAGE

(30) Priorität: 22.09.2015 DE 202015006660 U
(43) Veröffentlichungstag der Anmeldung: 29.03.2017
(73) Patentinhaber: Gebr. Kemper GmbH + Co. KG Metallwerke, 57462 Olpe (DE)
(72) Erfinder: Tomasetti, Tobias, 57489 Drolshagen (DE); Theile, Tobias, 57489 Drolshagen (DE)
(74) Vertreter: Grünecker Patent- und Rechtsanwälte PartG mbB

(56) Entgegenhaltungen:
- EP-A2- 1 895 245
- WO-A1-94/18509
- AT-B- 413 056
- DE-A1- 19 633 930
- DE-C1- 4 306 610
- FR-A3- 2 676 530

## Beschreibung

Die vorliegende Erfindung betrifft ein Absperrventil für ein Heizungssystem mit einem Ventilgehäuse, das einen Kanal für einen Vorlauf und einen Kanal für einen Rücklauf sowie einen die beiden Kanäle kurzschließenden Zirkulationskanal ausbildet. In dem Zirkulationskanal ist ein Ventilsitz vorgesehen, dem ein Ventilkörper eines Thermostatventiles zugeordnet ist. Dieses Thermostatventil hat ein Thermostatelement, welches als Stellelement für den Ventilkörper vorgesehen ist und durch die Temperatur des in dem Absperrventil geführten Heizungswassers gestellt wird.

Aus der DE 43 06 610 ist eine Mischarmatur mit einem Gehäuse bekannt, welches sich parallel erstreckende Kanäle für Warmwasser und Kaltwasser bereitstellt, denen jeweils ein Absperrorgan zugeordnet ist, welches so gestellt werden kann, dass die Kanäle unmittelbar durchgängig sind oder aber versperrt, sodass das durch die Kanäle in das Gehäuse eingeleitete Wasser einer sich quer zwischen den Kanälen erstreckenden Kammer zugeleitet wird, in der ein Drehschieber als Mischventil zugeordnet ist, der warmes und kaltes Wasser mischt und derart gemischtes Wasser an der Auslassseite des Gehäuse über die dort vorgesehenen Kanäle abgeben kann. Mit dem Mischschieber wird händisch das Verhältnis von Warm- und Kaltwasser eingestellt.

Eine andere Absperrarmatur ist aus der FR 2 676 530 bekannt, die ein Gehäuse mit durch das Gehäuse hindurch gehenden Kanälen und einem quer dazu liegenden Querkanal offenbart, dem ein Einwegventil zugeordnet ist. Den Kanälen ist jeweils ein Kugelventil zugeordnet, durch welches die Kanäle abgesperrt werden können. Eines der Ventile ist derart ausgebildet, dass der zugehörige Kanal durchgängig sein kann und mit dem Querkanal kommunizieren kann oder aber nicht durchgängig ist, aber mit dem Querkanal kommuniziert oder aber weder durchgängig ist noch mit dem Querkanal kommuniziert.

Das erfindungsgemäße Ventil kommt insbesondere als Zirkulationsbrücke zum Einsatz, die zusammen mit einer Trinkwassererwärmungsstation (TWES) verbaut wird. Dabei wird der Trinkwassererwärmungsstation Heizungswasser zugeführt, welches in einem Wärmetauscher in der TWES zu erwärmendes Brauchwasser erwärmt, so dass warmes Brauchwasser in einer durch die TWES angeschlossenen Einheit, beispielsweise einer Wohneinheit, zur Verfügung steht. Dieser Ausgestaltung eines Heizungssystems liegt die Überlegung zugrunde, dass lediglich das Heizungswasser in dem oder den Gebäude zirkulieren muss und warmes Brauchwasser dezentral in den jeweiligen TWES mittels Wärmetauscher bereitgestellt wird. Dadurch kann das Verrohrungsaufwand für die Bereitstellung von warmem Brauchwasser vermindert werden. Wenn ein entsprechendes Heizungssystem in einem großen Mehrfamilienhaus oder mehreren Häuser mit zentraler Heizungswasseraufbereitung verbaut wird, ergibt sich ein mitunter weitläufiges Rohrleitungsnetz für das Heizungswasser. Insbesondere im Sommerbetrieb, wenn kein Heizwärmebedarf in den jeweiligen Einheiten besteht, kann es passieren, dass bei längerer Nichtnutzung der Trinkwassererwärmung in allen Einheiten oder in allen Einheiten eines Teilbereiches das Heizungswasser in dem entsprechenden Gebäude oder Gebäudeteil nicht in Bewegung ist und auskühlt. Besteht dann ein Bedarf an Trinkwarmwasser, so dauert es recht lange, bis das Heizungswasser aus dem Kellerbereich eines Gebäudes an die entsprechende TWES gelangt und Wärme mit dem zu erwärmenden Trinkwasser tauschen kann. Dies ist nicht zumutbar. Aus diesem Grund wird in solchen Heizungssystemen ein thermostatisch geregelter Bypass montiert, und zwar üblicherweise an derjenigen Stelle eines Stranges für die Heizwasserzirkulation, die der Wärmequelle am entferntesten vorgesehen ist. Dieser Bypass wird auch als Zirkulationsbrücke bezeichnet. Er sorgt dafür, dass aufgrund thermostatischer Regelung bedingt durch die Temperatur des Heizungswassers an der entsprechenden Position jeweils eine Zirkulation gewährleistet wird. So kommt die Zirkulation des Heizungswassers auch im Sommerbetrieb nicht zum Erliegen.

Die vorliegende Erfindung will ein Absperrventil für ein Heizungssystems der eingangs genannten Art angeben, welches einen hohen praktischen Wert bietet, dabei kompakt bauend ist und sich leicht zwischen Vorlauf- und Rücklaufleitungen und der TWES montieren lässt.

Mit der vorliegenden Erfindung wird zur Lösung des Problems ein Absperrventil mit den Merkmalen von Anspruch 1 angegeben. Dieses Ventil hat in dem Kanal für den Vorlauf und in dem Kanal für den Rücklauf jeweils ein Absperrorgan, die zwischen einer Normalstellung, einer Ventilwartungsstellung und einer Stationswartungsstellung schaltbar sind. In der Normalstellung ist der Kanal durchgängig und mit dem Zirkulationskanal verbunden. In der Ventilwartungsstellung besteht keine Strömungsverbindung zwischen dem Kanal und dem Zirkulationskanal. Dieser Zirkulationskanal ist zumindest gegenüber zu der zentralen Heizungswasseraufbereitung führenden Rohren abgesperrt. Die Strömung zwischen dem Zirkulationskanal und dem Kanal für den Vorlauf bzw. den Rücklauf ist unterbrochen. So kann kein Heizungswasser von dem Kanal für den Vorlauf bzw. den Kanal für den Rücklauf in den Zirkulationskanal gelangen. In der Stationswartungsstellung ist der Kanal in Bezug auf den Zirkulationskanal auf der der zentralen Heizungswasseraufbereitung gegenüberliegenden Seite abgesperrt, der Zirkulationskanal hingegen für die Zirkulation von Heizungswasser, das von der zentralen Heizungswasseraufbereitung zugeführt bzw. dorthin abgeleitet wird, durchgängig Das Absperrventil nach Anspruch 1 unterscheidet sich vom Stand der Technik, wie er in der DE4306610C1 gezeigt ist darin, dass es sich bei dem Ventilkörper um den Ventilkörper eines Thermostatventils handelt, welches ein durch die Temperatur des geführten Heizungswassers gestelltes Thermostatelement aufweist, sowie darin, dass das Absperrorgan in der Normalstellung zusätzlich mit dem Zirkulationskanal verbunden ist. Bei dem erfindungsgemäßen Absperrventil werden die Kanäle und der Zirkulationskanal üblicherweise in einem einheitlichen Ventilgehäuse ausgebildet. Es handelt sich üblicherweise um ein Gussgehäuse aus den üblichen Legierungen, die für die Herstellung von wasserführenden Bauteilen Verwendung finden, wie insbesondere Kupferlegierungen oder Edelstahl. Die Kanäle sind üblicherweise endseitig mit Anschlusselementen für den Anschluss des Absperrventils an die Verrohrung des Heizungssystems, namentlich die Rohre für den Vorlauf und den Rücklauf versehen. Dabei können diese Anschlüsse einteilig an dem Ventilgehäuse ausgebildet sein. Sie können ebenso gut durch mit dem Ventilgehäuse verbundene Anschlussstutzen ausgebildet sein. Dies ist insbesondere dann zu bevorzugen, wenn das Absperrorgan der vorliegenden Erfindung als Kugelventilelement ausgebildet und dichtend in dem Ventilgehäuse aufgenommen ist. In diesem Fall ist bevorzugt eine Buchse in das Ventilgehäuse dichtend eingesetzt, welche das Kugelventilelement innerhalb des Ventilgehäuses fixiert und einseitig abdichtet. Diese Buchse kann Innen- oder Außengewinde für den Anschluss der Verrohrung des Heizungssystems aufweisen. Das Heizungssystem kann auch mittels Pressverbindung angeschlossen sein und so kann das Ventilgehäuse selbst oder eine daran montierte Buchse entsprechende Anschlussflächen für eine Pressverbindung aufweisen.

Das erfindungsgemäße Absperrventil hat ein Thermostatventil, welches üblicherweise eine Voreinstellung verwirklicht, um den Ventilkörper des Thermostatventils innerhalb des Ventilgehäuses und relativ zu dem Ventilsitz zu stellen, und zwar üblicherweise durch manuelles Verschrauben an einem Stellelement des Thermostatventils. Des Weiteren ist in an sich bekannter Weise ein Thermostatelement vorgesehen, welches durch die Temperatur des in dem Absperrventil geführten Heizungswassers gestellt ist, um abhängig von der Wassertemperatur den Durchgang durch den Zirkulationskanal zu verengen, gegebenenfalls zu verschließen oder zu erweitern, um eine Zirkulation und damit einen Bypass zwischen dem Vorlauf und dem Rücklauf abhängig von der Temperatur des über den Vorlauf einströmenden Heizungswassers zu regeln. Bei verhältnismäßig kaltem Heizungswasser macht das Thermostatventil vermehrt auf, um durch vermehrte Zirkulationsströmung eine Erhöhung der Vorlauftemperatur zu erreichen.

In der Normalstellung erlaubt das erfindungsgemäße Absperrventil zum einen eine Zirkulationsströmung, durch welche die vorlaufseitige Temperatur auf einem gewünschten Wert gehalten wird. Bei einer Änderung der Vorlauftemperatur öffnet oder schließt das Thermostatventil. Die Regelung erfolgt mit dem Ziel, eine möglichst konstante Wunschtemperatur auf der Vorlauflseite bereitzustellen. So steht Energie für das Zapfen von Warmwasser bzw. die Heizung der Einheit unmittelbar an der TWES an, insbesondere dann, wenn das erfindungsgemäße Absperrventil die Schnittstelle zwischen TWES und der Verrohrung des Heizungssystems für den Vorlauf und den Rücklauf zu dem TWES bildet. Das TWES ist dabei vorzugsweise in einem einheitlichen Gehäuse vorgesehen, welches über das erfindungsgemäße Absperrventil eine Anschlussmöglichkeit für den Vorlauf und den Rücklauf des Heizungssystems bereitstellt.

In der Normalstellung kann dementsprechend durch die Kanäle Heizungswasser in das TWES eintreten und aus diesem abgezogen werden. Eine Zirkulation unter Einbeziehung des TWES ist möglich, so dass beispielsweise im Winterbetrieb in der Normalstellung Heizungswasser in der Einheit zirkulieren und diese beheizen kann.

In der Ventilwartungsstellung ist in der Regel weder der Kanal noch der Zirkulationskanal durchgängig. Sofern sowohl am Vorlauf als auch am Rücklauf Absperrorgane vorgesehen sind, wird durch die Ventilwartungsstellung der Zirkulationskanal drucklos gestellt, um beispielsweise das thermostatische Regulierventil zu warten, auszutauschen oder zu reparieren. Das Absperrorgan kann vorzugsweise so vorgesehen sein, dass in der Ventilwartungsstellung auch der dem jeweiligen Absperrorgan zugeordnete Kanal gegenüber zu der zentralen Heizungswasseraufbereitung abgesperrt ist. So kann in dieser Ventilwartungsstellung auch die über das erfindungsgemäße Absperrventil angeschlossene TWES gewartet werden. Jedenfalls bietet aber das erfindungsgemäße Ventil in der Stationswartungsstellung die Möglichkeit einer Zirkulation durch den Zirkulationskanal, thermisch gesteuert durch das Thermostatventil, bei vollständigem Abschluss der TWES, um eine oder mehrere Komponenten der TWES zu reparieren oder auszutauschen. Trotz der Absperrung der TWES in der Stationswartungsstellung ist die Zirkulation weiterhin gegeben, da der an die zentrale Heizungswasseraufbereitung und an die Zirkulationsleitung angeschlossene Bereich des Kanals noch mit dem zu der zentralen Heizungswasseraufbereitung führenden Rohr kommuniziert. So können auch längere Wartungsarbeiten durchgeführt werden, ohne dass die thermische Stabilität des gesamten Systems beeinträchtigt wird und die weiteren TWES des Gebäudes in der gewünschten Weise mit Heizungswasser in der gewünschten Temperatur versorgt werden.

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
- Fig. 1: eine perspektivische Seitenansicht eines Ausführungsbeispiels eines erfindungsgemäßen Absperrventils;
- Fig. 2A, 2B: eine Draufsicht bzw. eine Längsschnittansicht des Ausführungsbeispiels nach Fig. 1
- in: der Normalstellung der Absperrorgane;
- Fig. 3A, 3B: Darstellungen gemäß Fig. 2A, 2B in der Ventilwartungsstellung der Absperrorgane;
- Fig. 4A, 4B: die Darstellungen nach den Fig. 2A, 3A bzw. 2B, 3B in der Stationswartungsstellung der Absperrorgane;
- Fig. 5: eine Schnittansicht entlang der Linie V-V gemäß der Darstellung in Fig. 2B; und
- Fig. 6: ein Ausführungsbeispiel einer TWES mit dem in dem Fig. 1 bis 5 gezeigten Ausführungsbeispiel des Absperrventils.

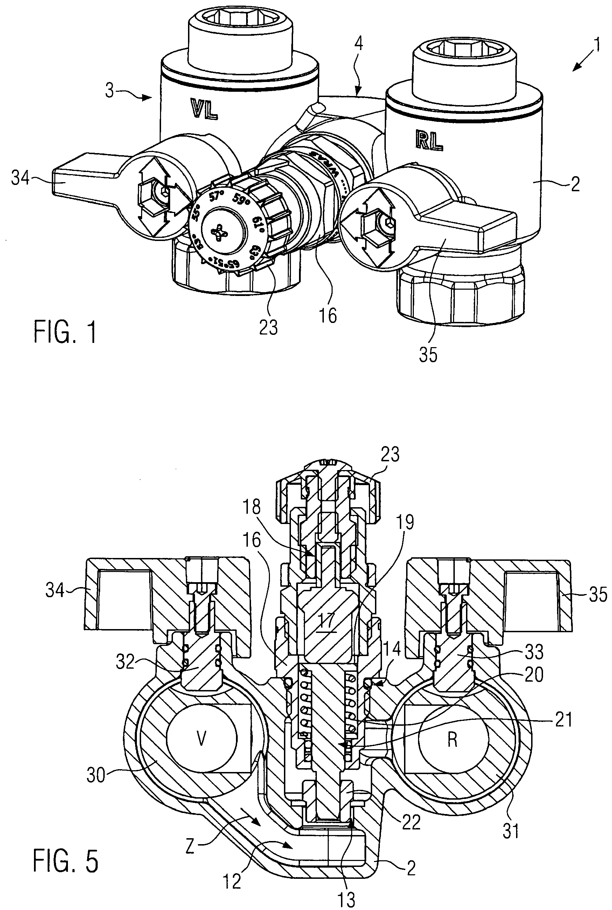

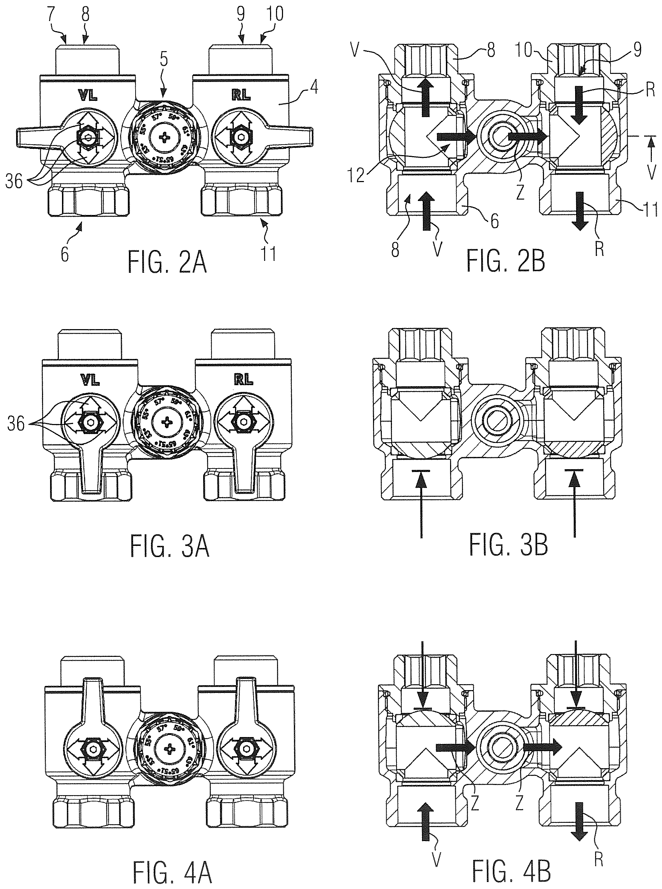

Die Fig. 1 zeigt eine perspektivische Seitenansicht eines mit Bezugszeichen 1 gekennzeichneten Absperrventils, welches ein einheitliches metallisches und gegossenes Gehäuse 2 umfasst. Dieses Gehäuse 2 ist im Wesentlichen H-förmig mit zwei Schenkeln 3, 4 und einem diese Schenkel 3, 4 verbindenden Steg 5 ausgebildet (vgl. Fig. 2A). Die Schenkel 3, 4 bilden an ihren jeweiligen Enden Anschlüsse aus, nämlich einen Anschluss 6 für eine den Vorlauf zuführenden Rohrleitungsabschnitt des nicht gezeigten Heizungssystems und einen Anschluss 7 für das Ableiten des Vorlaufs. Der entsprechende Schenkel 3 bildet dementsprechend einen Kanal 8 für den Vorlauf aus. Der andere Schenkel 4 bildet einen Kanal 9 für den Rücklauf mit zugeordneten Anschlüssen 10 für die Zuleitung des Rücklaufs und Anschluss 11 für die Ableitung des Rücklaufs aus.

Zwischen den beiden Kanälen 8, 9 ist ein Zirkulationskanal 12 innerhalb des Gehäuses 2 ausgespart, der insbesondere der Fig. 5 zu entnehmen ist. Dieser Zirkulationskanal 12 ist mit einem Ventilsitz 13 versehen, der einteilig an dem Gehäuse 2 ausgebildet ist.

Das Gehäuse 2 bildet an seiner dem Ventilsitz 13 gegenüberliegenden Seite eine stutzenförmige Aufnahme 14 für ein mit Bezugszeichen 15 gekennzeichnetes Thermostatventil aus. Das Thermostatventil 15 hat ein Thermostatgehäuse 16 mit einer Aufnahme für ein Dehnstoffelement 17 eines Thermostatreglers 18. Das Dehnstoffelement 17 wirkt auf einen Teller 19 ein, der gegen die Kraft einer Feder 20 in Richtung auf das Dehnstoffelement 17 vorgespannt gehalten ist. Mit dem Teller 19 ist ein Stößel 21 gekoppelt, der einen Ventilkörper 22 trägt. Durch Verschrauben einer Kappe 23 des Thermostatreglers 18 relativ zu dem Thermostatgehäuse 16 kann der Stößel 21 und damit das Thermostatventil 15 voreingestellt werden.

Wie die Fig. 1 bis 4 verdeutlichen, ist in jedem der Kanäle 8, 9 jeweils ein Dreiwege-Kugelventilelement 30, 31 vorgesehen. Über mit dem Kugelventilelement 30, 31 jeweils verbundene Wellen 32, 33 mit daran angeschlossenen Hebelelementen 34, 35 können die Kugelventilelemente 30, 31 in verschiedene Stellungen gebracht werden.

Dabei zeigen die Fig. 1 sowie 2A, 2B die Normalstellung, in welcher die in dem Kugelventilelement 30, 31 jeweils ausgebildeten Durchgänge so ausgerichtet sind, dass der Kanal 8 für den Vorlauf von dem vorlaufenden Heizungswasser, der Kanal 9 für den Rücklauf von dem rücklaufenden Heizungswasser und der Zirkulationskanal 12 als Bypass zwischen dem Vorlauf und dem Rücklauf von dem Heizungswasser durchströmt ist, letzterer abhängig von der Stellung des Thermostatventils 15. Mit Bezugszeichen 36 gekennzeichnete Markierungen auf der Oberfläche der Hebelelemente verdeutlichen die Durchgängigkeit des entsprechenden Absperrventils 1 für die Vorlauflaufströmung V und die Rücklaufströmung R zu dem TWES. Die in Fig. 5 eingezeichneten Richtungspfeile Z deuten in dieser Normalstellung die thermisch gesteuerte Zirkulationsströmung an.

Wie die Markierungen und deren Ausrichtung nach Fig. 3A belegen, ist in der dort gezeigten Ventilwartungsstellung jedes der Kugelventilelemente 30, 31 so gestellt, dass die Kanäle 8, 9 bereits im Bereich des Anschlusses 6 bzw. 11 abgesperrt sind. So gelangt weder vorlaufendes noch rücklaufendes Heizungswasser zu dem Zirkulationskanal und auch nicht auf die der Warmwasseraufbereitung gegenüberliegende Seite des Absperrventils 1. Diese gegenüberliegende Seite ist danach drucklos gestellt. Die in Fig. 3A, 3B gezeigte Stellung eignet sich somit sowohl zum Austausch von Komponenten auf dieser abgewandten Seite des Absperrventils 1 wie auch zur Wartung, Reparatur, Reinigung oder dem Austausch des Thermostatventils 15 oder Teile davon.

Die Fig. 4A, 4B zeigen schließlich eine Stationswartungsstellung, in welcher der auf der anderen Seite des von der zentralen Heizwasseraufbereitung kommenden Vorlaufs V bzw. des zu dieser führenden Rücklaufs R befindliche Bereich abgesperrt ist. So kann in dieser Stellung das auf der entsprechenden Seite durch die Armatur 1 angeschlossene TWES insgesamt oder Teile davon ausgetauscht oder gewartet werden. Gleichwohl bleibt die Zirkulation des Gesamtsystems erhalten, da der Zirkulationskanal 12 in dieser Stationswartungsstellung offen bleibt, d. h. der von der zentralen Heißwasseraufbereitung kommende Vorlauf V über den Zirkulationskanal 12 mit dem zu der zentralen Heißwasseraufbereitung führenden Rücklauf R kommuniziert.

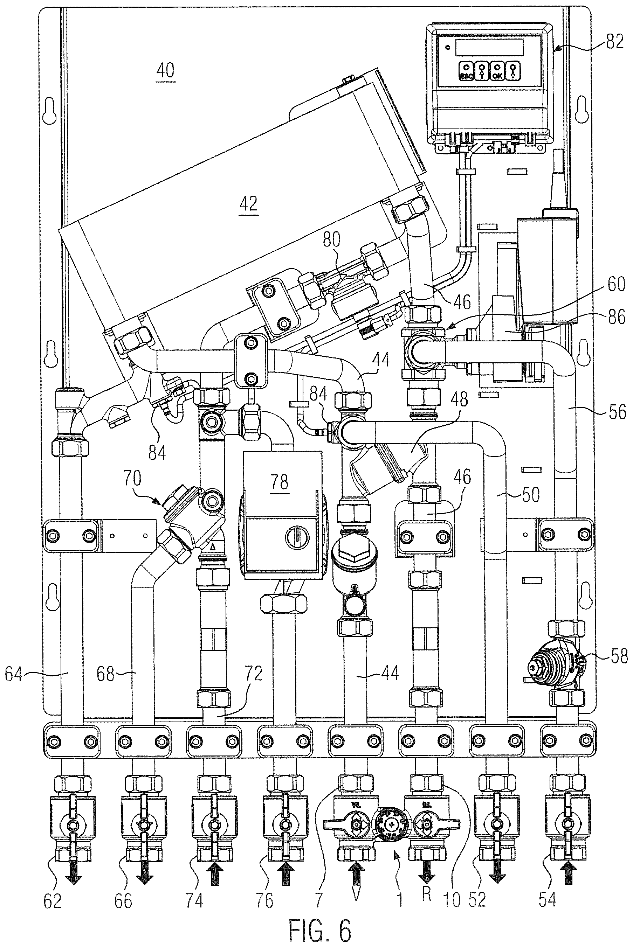

Die Fig. 6 zeigt ein Beispiel für den Einbau des zuvor diskutierten Ausführungsbeispiels eines Absperrventils 1 in einem TWES, dessen Komponenten nachstehend näher erläutert werden. as TWES hat eine Gehäusebasis 40, die üblicherweise an einer Gebäudewand montiert ist und mit einer nicht gezeigten Abdeckung abgedeckt ist. Zwischen der Gehäusebasis 40 und der Abdeckung befinden sich Komponenten zur Steuerung von Wasserströmen und ein Wärmetauscher 42, der als Plattenwärmetauscher ausgebildet ist und über Heizwasservorlaufrohre 44 mit dem Anschluss 7 für den Vorlauf des Absperrventils 1 verbunden ist. Das von einer Zentralheizung kommende Warmwasser wird als primäres Medium in den Wärmetauscher 42 eingeleitet und über Heizungswasserrücklaufrohre 46 abgeleitet und über den Anschluss 10 für den Rücklauf durch das Absperrventil 1 abgeleitet. Zwischen den Heizwasservorlauf- und Rücklaufrohren 44, 46 ist ein Differenzdruckregler 48 geschaltet. Von den Heizwasservorlaufrohren 44 geht ferner eine Heizwasservorlaufleitung für eine Wohnung 50 ab, die über ein Absperrventil Heizwasser-Vorlauf Wohnung 52 an der Außenseite der TWES anschließbar ist. Daneben befindet sich eine Absperrventil-Heizwasser-Rücklauf Wohnung 54, über welches der Rücklauf des Heizwassers aus der Wohnung in das TWES zurückgeleitet wird. Eine mit Bezugszeichen 56 gekennzeichnete Heizwasserrücklaufleitung für die Wohnung ist mit einem Zonenventil 58 versehen und mündet über ein Drei-Wege-Regelventil 60 in eines der Heizwasserrücklaufrohre 46.

Höhengleich zu dem Absperrventil 1 und den zuvor diskutieren Absperrventilen mit Bezugszeichen 52 und 54 befinden sich weitere Ventile, nämlich ein Absperrventil Trinkwasser warm 62, das über eine Leitung für warmes Trinkwasser 64 an den Auslass der Sekundärseite des Wärmetauschers 42 angeschlossen ist. Über dieses Absperrventil 62 erfolgt die Versorgung der angeschlossenen Wohnung mit warmem Trinkwasser.

Mit Bezugszeichen 66 ist ein Absperrventil Trinkwasser kalt gekennzeichnet, welches über eine Leitung für kaltes Trinkwasser 68 unter Zwischenschaltung eines Schmutzfängers 70 mit einer Zuleitung 72 für kaltes Trinkwasser verbunden ist, die über ein Absperrventil 74 mit dem Kaltwasseranschluss des Gebäudes verbindbar ist. Über dieses Absperrventil 74 wird kaltes Trinkwasser aus dem öffentlichen Versorgungsnetz in das TWES eingeleitet. Die Weiterleitung des kalten Trinkwassers an die Wohnung erfolgt über das Absperrventil 66.

Mit Bezugszeichen 76 ist schließlich ein Absperrventil gekennzeichnet, über welches aus der Wohnung zirkulierendes warmes Trinkwasser in das TWES eingeleitet werden kann. Hierzu ist in dem TWES eine Zirkulationspumpe 78 vorgesehen, die das warme Trinkwasser in der Wohnung zirkulieren lässt und je nach Verbrauchslage innerhalb der Wohnung dem durch die Zuleitung TWK 72 geführten kalten Trinkwasser zumischt, so dass dieses dem Wärmetauscher 42 zur Erwärmung zugeführt werden kann. Zur Steuerung dieser Zuströmung auf der Sekundärseite des Wärmetauschers 42 ist ein Volumenstrom- und Temperatursensor 80 zwischengeschaltet, der datenmäßig mit einer Regelung 82 verbunden ist, die auch die Signale von Temperatursensoren 84 verarbeitet und auch einen Motor 86 zur Stellung des Drei-Wege-Regelventils 60 ansteuert.

Damit ist ein Ausführungsbeispiel einer bevorzugten Anwendung des erfindungsgemäßen Absperrventils verdeutlicht.

### Bezugszeichenliste

- 1: Absperrventil
- 2: Gehäuse
- 3: Schenkel
- 4: Schenkel
- 5: Steg
- 6: Anschluss Zuleitung Vorlauf
- 7: Anschluss Ableitung Vorlauf
- 8: Kanal Vorlauf
- 9: Kanal Rücklauf
- 10: Anschluss Zuleitung Rücklauf
- 11: Anschluss Ableitung Rücklauf
- 12: Zirkulationskanal
- 13: Ventilsitz
- 14: Aufnahme
- 15: Thermostatventil
- 16: Thermostatgehäuse
- 17: Dehnstoffelement
- 18: Thermostatregler
- 19: Teller
- 20: Feder
- 21: Stößel
- 22: Ventilkörper
- 23: Kappe
- 30: Kugelventilelement
- 31: Kugelventilelement
- 32: Welle
- 33: Welle
- 34: Hebelelement
- 35: Hebelelement
- 36: Markierung
- 40: Gehäusebasis
- 42: Wärmetauscher
- 44: Heizwasservorlaufrohre
- 46: Heizwasserrücklaufrohre
- 48: Differenzdruckregler
- 50: Heizwasservorlaufleitung für Wohnung
- 52: Absperrventil HW-Vorlauf-WG
- 54: Absperrventil HW-Rücklauf-WG
- 56: Heizwasserrücklaufleitung für Wohnung
- 58: Zonenventil
- 60: Drei-Wege-Regelventil
- 62: Absperrventil TWW
- 64: TWW-Leitung
- 66: Absperrventil TWK
- 68: TWK-Leitung
- 70: Schmutzfänger
- 72: TWK-Zuleitung
- 74: Absperrventil TWK Zentrale Versorgung
- 76: Absperrventil TWW Zirkulation
- 78: Zirkulationspumpe
- 80: Volumenstrom- und Temperatursensor
- 82: Regelung
- 84: Temperatursensor
- 86: Motor
- V: Vorlauf
- R: Rücklauf
- Z: Zirkulation

## Patentansprüche

1. Absperrventil (1) für ein Heizungssystem mit einem Ventilgehäuse (2), das zwischen einem Kanal (8) für einen Vorlauf und einem Kanal (9) für einen Rücklauf einen die beiden Kanäle (8, 9) kurzschließenden Zirkulationskanal (12) ausbildet, in dem ein Ventilsitz (13) vorgesehen ist, dem ein Ventilkörper (22) eines Thermostatventils (15) zugeordnet ist, das ein durch die Temperatur des geführten Heizungswassers gestelltes Thermostatelement (17) aufweist, wobei in dem Kanal (8) für den Vorlauf und dem Kanal (9) für den Rücklauf jeweils ein Absperrorgan (30, 31) vorgesehen ist, die zwischen einer Normalstellung, in der der Kanal (8, 9) durchgängig und mit dem Zirkulationskanal (12) verbunden ist, einer Ventilwartungsstellung, in der die Kanäle (8, 9) gegenüber dem Zirkulationskanal (12) abgesperrt sind, und einer Stationswartungsstellung, in der die Kanäle (8, 9) abgesperrt und der Zirkulationskanal (12) durchgängig ist, schaltbar sind.

2. Absperrventil (1) nach Anspruch 1, **dadurch gekennzeichnet, dass** das Absperrorgan als Kugelventilelement (30; 31) ausgebildet ist.

3. Heizungssystem für ein Gebäude mit einem Vorlauf und einem Rücklauf und zumindest einer an Vorlauf und Rücklauf angeschlossenen Trinkwassererwärmungsstation, **gekennzeichnet durch** ein Absperrventil nach einem der Ansprüche 1 oder 2, dessen einer Kanal (8) mit dem Vorlauf und dessen anderer Kanal (9) mit dem Rücklauf verbunden ist.

## Claims

1. Shut-off valve (1) for a heating system, comprising a valve housing (2) which forms, between a channel (8) for a supply flow and a channel (9) for a return flow, a circulation channel (12), which short-circuits the two channels (8, 9) and in which a valve seat (13), associated with a valve body (22) of a thermostat valve (15), is provided, which thermostat valve comprises a thermostat element (17) that is set by the temperature of the guided heating water, wherein a shut-off member (30, 31) is provided both in the channel (8) for the supply flow and in the channel (9) for the return flow, which members can be switched between a normal position, in which the channel (8, 9) is continuous and connected to the circulation channel (12), a valve maintenance position, in which the channels (8, 9) are shut off with respect to the circulation channel (12), and a station maintenance position, in which the channels (8, 9) are shut off and the circulation channel (12) is continuous.

2. Shut-off valve (1) according to claim 1, **characterised in that** the shut-off member is designed as a ball valve element (30;31).

3. Heating system for a building, comprising a supply flow and a return flow, and comprising at least one drinking water heating station that is connected to the supply flow and the return flow, **characterised by** a shut-off valve according to either claim 1 or claim 2, one channel (8) of which valve is connected to the supply flow and the other channel (9) of which valve is connected to the return flow.

## Revendications

1. Vanne d'isolement (1) pour un système de chauffage, comprenant un corps de vanne (2), qui forme, entre un canal (8) pour un circuit aller et un canal (9) pour un circuit retour, un canal de circulation (12) court-circuitant les deux canaux (8, 9) et dans lequel est prévu un siège de soupape (13) auquel est associé un corps de fermeture de soupape (22) d'une soupape thermostatique (15), qui comporte un élément thermostatique (17) réglé par la température de l'eau de chauffage véhiculée, vanne d'isolement
pour laquelle dans le canal (8) pour le circuit aller et dans le canal (9) pour le circuit retour, il est prévu respectivement un organe d'obturation (30, 31), ces organes d'obturation pouvant être commutés entre une position normale pour laquelle le canal (8, 9) est passant et est relié au canal de circulation (12), une position d'entretien de vanne pour laquelle les canaux (8, 9) sont isolés par rapport au canal de circulation (12), et une position d'entretien de station pour laquelle les canaux (8, 9) sont isolés et le canal de circulation (12) est passant.

2. Vanne d'isolement (1) selon la revendication 1, **caractérisée en ce que** l'organe d'obturation est réalisé en tant qu'élément de boisseau sphérique (30; 31).

3. Système de chauffage pour un bâtiment, comprenant un circuit aller et un circuit retour, et au moins une station d'échauffement d'eau potable raccordée au circuit aller et au circuit retour, **caractérisé par** une vanne d'isolement selon l'une des revendications 1 ou 2, dont un canal (8) est relié au circuit aller et dont l'autre canal (9) est relié au circuit retour.
